# EUROPÄISCHE PATENTANMELDUNG

(11) **EP 4 389 973 A1**
(43) Veröffentlichungstag der Anmeldung: **26.06.2024**
(21) Anmeldenummer: 23185511.5
(22) Anmeldetag: 14.07.2023
(51) Int. Cl.: D21J 3/10, D21J 7/00, B27N 5/00

(54) **VERFAHREN UND VORRICHTUNG ZUM ÜBERWACHEN UND REGELN EINER WANDDICKENVERTEILUNG BEI EINEM HERSTELLUNGSPROZESS VON FASERN UMFASSENDEN BEHÄLTERN**

(30) Priorität: 20.12.2022 DE 102022134118
(71) Anmelder: Krones AG, 93073 Neutraubling (DE)
(72) Erfinder: PETER, Daniel, Neutraubling (DE); WINZINGER, Frank, Neutraubling (DE)
(74) Vertreter: Grünecker Patent- und Rechtsanwälte PartG mbB

(57) **Zusammenfassung**

Die Erfindung betrifft ein Verfahren zum Überwachen und Regeln einer Wanddickenverteilung bei einem Herstellungsprozess von Fasern umfassenden Behältern (8), wobei das Verfahren umfasst: ein Herstellen eines Fasern umfassenden Behälters (8) mittels eines mehrere Herstellungsschritte (2, 3, 4, 5, 6, 7) umfassenden Herstellungsprozesses, der eine faserhaltige Pulpe verwendet, ein Messen einer Wanddickenverteilung (9) des hergestellten Behälters (8), ein Vergleichen (11) der gemessenen Wanddickenverteilung (9) mit einer Soll-Wanddickenverteilung (10) und bei einer Abweichung (12) der gemessenen Wanddickenverteilung (9) von der Soll-Wanddickenverteilung (10), Regeln (14, 15, 16, 17, 18 ,19) von zumindest einem der mehreren Herstellungsschritte (2, 3, 4, 5, 6, 7). Weiter betrifft die Erfindung einen Fasern umfassender Behälter, der mittels des Verfahrens hergestellt wurde. Zudem betrifft die Erfindung eine Vorrichtung zum Überwachen und Regeln einer Wanddickenverteilung bei einem Herstellungsprozess von Fasern umfassenden Behältern (8) mittels des Verfahrens und eine Vorrichtung zum Herstellen eines Fasern umfassenden Behälters (8).

## Beschreibung

Die Erfindung betrifft ein Verfahren und eine Vorrichtung zum Überwachen und Regeln einer Wanddickenverteilung bei einem Herstellungsprozess von Fasern umfassenden Behältern, einen Fasern umfassenden Behälter und eine Vorrichtung zum Herstellen eines Fasern umfassenden Behälters gemäß den unabhängigen Ansprüchen.

### Stand der Technik

Es ist bekannt, dass Fasern umfassende Behälter für eine Handhabung im Allgemeinen, eine Befüllung mit Produkt und beispielsweise einen Transport und/oder eine Lagerung der mit Produkt befüllten Behälter eine ausreichende Wanddicke aufweisen sollten. Fasern umfassende Behälter können auf verschiedene Weisen hergestellt werden, beispielsweise mit einem Anschwemmverfahren von Pulpe oder mit einem Sprühkopf, der Pulpe oder trockene Fasern in einer Form verteilt. Anschließen kann in derselben Form oder in einer weiteren Form ein Pressen erfolgen.

### Aufgabe

Die Aufgabe der Erfindung ist es, ein Verfahren und eine Vorrichtung zum Überwachen und Regeln einer Wanddickenverteilung bei einem Herstellungsprozess von Fasern umfassenden Behältern, einen Fasern umfassenden Behälter und eine Vorrichtung zum Herstellen eines Fasern umfassenden Behälters zur Verfügung zu stellen, wodurch eine geforderte Qualität eines hergestellten, Fasern umfassenden Behälters erreichbar ist.

### Lösung

Die Aufgabe wird gelöst durch das Verfahren und die Vorrichtung zum Überwachen und Regeln einer Wanddickenverteilung bei einem Herstellungsprozess von Fasern umfassenden Behältern, den Fasern umfassenden Behälter und eine Vorrichtung zum Herstellen eines Fasern umfassenden Behälters gemäß den unabhängigen Ansprüchen. Weitere Ausführungsformen sind in den Unteransprüchen offenbart.

Das erfindungsgemäße Verfahren zum Überwachen und Regeln einer Wanddickenverteilung bei einem Herstellungsprozess von Fasern umfassenden Behältern umfasst ein Herstellen eines Fasern umfassenden Behälters mittels eines mehrere Herstellungsschritte umfassenden Herstellungsprozesses, der eine faserhaltige Pulpe oder trockene Fasern verwendet, ein Messen einer Wanddickenverteilung des hergestellten Behälters, ein Vergleichen der gemessenen Wanddickenverteilung mit einer Soll-Wanddickenverteilung und bei einer Abweichung der gemessenen Wanddickenverteilung von der Soll-Wanddickenverteilung, ein Regeln von zumindest einem der mehreren Herstellungsschritte. Das Messen der Wanddickenverteilung kann mittels Ultraschall, Radar, Resonanz und oder kapazitiven Sensoren erfolgen.

Das Verfahren kann als ein automatisches Verfahren ablaufen. Die verschiedenen Schritte des Verfahrens können ohne die Interaktion eines Menschen durchgeführt werden.

Das Messen der Wanddickenverteilung kann beispielsweise über ein Abtasten erfolgen. Beispielsweise kann dazu ein Messfinger an eine Innenseite des Behälters angedrückt und quasi an derselben Position außerhalb des Behälters ein weiterer Messfinger von außen an denselben Wandabschnitt angelegt werden. Über den Winkel oder eine andere Skale, z.B. wie bei einer Schieblehre, kann die Wanddicke dann ermittelt werden.

Das Messen der Wanddickenverteilung kann alternativ auch über Ultraschallwellen oder andere Methoden durchgeführt werden. Beispielsweise kann das Messen über elektromagnetische Strahlung erfolgen. Hier sind viele Strahlungsarten entlang des Spektrums vorstellbar. Je nach Dicke der Wand wäre auch eine Messung mit Licht im sichtbaren Bereich denkbar.

Beispielsweise kann ein Messen der Transmission von Strahlung durch zwei Wände des Behälters erfolgen.

Beispielsweise kann ein Sender auf einer Seite des Behälters und ein Empfänger auf der anderen Seite des Behälters angeordnet sein. Der Empfänger kann eine Stärke bzw. eine Helligkeit der Strahlung feststellen, die den Behälter durchdrungen hat.

Beispielsweise kann alternativ auch nur durch eine Wand des Behälters gemessen werden, indem man eines der Messwerkzeuge (Sender oder Empfänger) im Inneren des Behälters anordnet.

Beispielsweise kann die Wanddicke auf mehreren Höhenniveaus des Behälters gemessen werden.

Beispielsweise kann zusätzlich oder alternativ die Wanddicke entlang mehrerer Positionen entlang des Umfangs des Behälters gemessen werden.

Die mehreren dafür nötigen Messungen können von demselben Messwerkzeug nacheinander oder von mehreren Messwerkzeugen, beispielsweise gleichzeitig, durchgeführt werden.

Unter einer Messung der Wanddicke kann auch das Generieren eines Wertes bzw. eines Signals verstanden werden, das in eine Wanddicke umgerechnet werden kann, beispielsweise mittels einer Proportionalität. Gibt beispielsweise ein Empfänger lediglich eine Stromstärke aus, die mit einem Faktor zu einer Wanddicke umgerechnet werden kann (aber nicht wird), soll darunter auch schon ein Messen der Wanddicke verstanden werden. Diese Werte sind nämlich auch schon für eine Regelung geeignet.

Eine Wanddicke kann alternativ mittels Durchschneiden eines Behälters und optischer Erfassung der Schnittfläche ermittelt werden, beispielsweise mittels Kamera und Bildauswertung. Dies kann auch mehrfach auf unterschiedlichen Höhenniveaus ("in Ringen") oder entlang verschiedener Umfangspositionen ("in Kuchenstücken") des Behälters erfolgen.

Eine Wanddicke kann auch durch Wiegen einzelner Bestandteile des Behälters bestimmt werden.

Ein Messen kann bei jedem produzierten Behälter erfolgen oder stichprobenartig in Zeitabständen (z.B. eine Messung pro Stunde oder pro 1.000 produzierter Behälter oder eine Messung pro Form und pro Zeiteinheit).

Ein Messwerkzeug kann beispielsweise Behälter von mindestens zwei, beispielsweise von allen, Formen vermessen.

Umfasst eine Herstellungsvorrichtung mehrere Formen, so kann eine Regelung genau für die Form durchgeführt werden, in der der vermessene Behälter hergestellt wurde. Mittels einer Steuerung kann eine Zuordnung zu der bestimmten Form bestimmt werden. Beispielsweise kann diese Zuordnung über eine Erkennung einer Kavitätennummer erfolgen oder über die Reihenfolge, in der die Behälter in den Formen hergestellt und zur Messvorrichtung transportiert werden.

Die Wanddicke kann in einer Ausführungsform während des Herstellens des Behälters gemessen werden. Auf diese Weise kann es möglich sein, die Regelung für denselben Behälter durchzuführen und die Wanddicke zu beeinflussen.

Alternativ kann eine Wanddickenmessung an einem Behälter lediglich für die Regelung der Herstellung anderer Behälter verwendet werden. Die Fasern können Lignin, Bananenblätter und/oder Chinin umfassen. Die Fasern können beispielsweise Zellulosefasern, Fasern von Nadelhölzern, Blattgehölzen und/oder Platanen und/oder von Gräsern, Schilf und/oder Bambus oder dergleichen umfassen. Die Fasern können Seidenfäden, Spinnenfäden, Algen, natürliche Fasern (wie Donau-Silphie-Fasern, Hanf, Mais, Baumwolle), Bananenschalen, Orangenschalen, Gras, Stroh, Kartoffelstärke oder aufbereiteten Kuhdung umfassen. Auch können Zellstofffasern vorgesehen sein, die einem Prozess entstammen, durch den sie künstlich gezüchtet wurden. Diese alternativen Materialien können bei Materialengpässen von Holz als Grundstoff für eine fluide Masse mit Fasern, den Grundstoff vollständig oder teilweise ersetzen.

Die Fasern können Fasermischungen aus holzfremden Material, beispielsweise Baumwolle, Hanf, und/oder Textilfasern umfassen.

Beispielsweise können die Fasern Viskosefasern umfassen. Eine Viskosefaser ist eine künstliche Faser aus regenerierter Zellulose, wobei die Viskosefasern als Ausgangsbasis 100% Zellulose haben, die in einem mehrstufigen Verfahren behandelt wird. Die Viskosefasern können eine flache oder kabelförmige Struktur, eine trilobale Form oder eine doppelt trilobale Struktur umfassen. Die Fasern können eine flächige oder hohle Struktur oder eine geriffelte oder raue äußere Oberfläche umfassen.

Es können auch verschiedenartige Fasern in Kombination verwendet werden. Beispielsweise können Fasern mit unterschiedlichen äußeren Oberflächen und/oder Formen und/oder hohler Struktur und/oder flächiger Struktur und/oder aus verschiedenen Materialien kombiniert werden.

Durch den natürlichen Ursprung der Fasern können diese biologisch abbaubar sein. Zudem sind sie nachhaltig und nachwachsend.

Die Fasern können in der faserhaltigen Pulpe verwendet werden. Die Pulpe kann eine Mischung aus Wasser, beispielsweise mit Additiven, und den Fasern, oder auch einer Kombination der Fasern, sein oder umfassen.

Eine Wanddickenverteilung eines Behälters kann einen konstanten Wert der Wanddicke über den gesamten Behälter aufweisen oder die Wanddickenverteilung eines Behälters kann verschiedene Werte der Wanddicke in verschiedenen Bereichen des Behälters aufweisen. Beispielsweise kann die Wanddicke im Bereich eines Gewindestrangs (=Gewinde) größer sein als in einem Halsbereich ohne Gewindestrang. Die Wanddicke eines Körperbereichs des Behälters kann kleiner sein als eine Wanddicke im Bodenbereich.

Die mehreren Herstellungsschritte des Herstellungsprozesses des Fasern umfassenden Behälters können ein Bereitstellen von faserhaltiger Pulpe, ein Einbringen der Pulpe in eine Form und/oder ein Pressen der Pulpe in der Form zum Ausformen des Fasern umfassenden Behälters umfassen. Weitere Herstellungsschritte können vorgesehen sein.

Im Folgenden werden einige Stellgrößen der Regelung beschrieben, deren Werte jeweils mit einer Regelung beeinflussbar sein können, nach oben oder nach unten.

Ein Wassergehalt der Pulpe und/oder eine Temperatur der Pulpe können Einfluss auf die Herstellung des Fasern umfassenden Behälters und seiner Wanddickenverteilung haben.

Beim Einbringen der Pulpe in die Form, deren Innenfläche im Wesentlichen einer Negativform der Außenkontur des herzustellenden Behälters entsprechen kann, kann eine Temperatur der Form und/oder eine Art des Einbringens der Pulpe Einfluss auf die Herstellung des Fasern umfassenden Behälters und seiner Wanddickenverteilung haben. Eine Art des Einbringens kann eine Anschwemm- und/oder Anspritzverteilung der Pulpe umfassen. Beispielsweise kann die Anschwemm- und/oder Anspritzverteilung derart entlang einer Höhe und/oder eines Umfangs des herzustellenden Behälters variieren, dass auch bei Behältern mit einem nicht-runden Querschnitt eine gleichmäßige Verteilung der Pulpe erreichbar sein kann. In verschiedenen Bereichen der Form können gleichmäßige Verteilungen der Pulpe mit einer gleichen oder mit unterschiedlichen Dicken vorliegen. Ein nicht-runder Querschnitt kann ein ovaler oder ellipsenförmiger oder dreieckiger oder rechteckiger oder allgemein mehreckiger Querschnitt sein. Beispielsweise kann die Größe des Querschnitts entlang der Höhe des Behälters variieren; dies kann auch für einen runden Querschnitt gelten.

Beim Einbringen der Pulpe mittels einer Anschwemm- und/oder Anspritzverteilung können auch ein oder mehrere Bereiche vorgesehen sein, wo eine Mehrfachanschwemmung bzw. Mehrfachspritzung von Pulpe erfolgen kann. Jene Bereiche, die keine Mehrfachanschwemmung bzw. Mehrfachspritzung von Pulpe erfahren sollen, können während der Anschwemm- und/oder Anspritzverteilung verdeckt werden.

Es kann Bereiche des Behälters geben, die bei mindestens einer Anschwemmung bzw. Anspritzung ausgenommen sein können.

Entlang der Höhe des Behälters kann ein Ausnehmen von einer Anschwemmung durch die Gewichtskraft der Pulpe erfolgen, indem die Anschwemmform nur teilweise gefüllt wird. Der obere Bereich kann dann ausgenommen sein.

Insbesondere kann daran gedacht werden, die Form zwischen zwei Anschwemmungen um eine horizontale Achse zu drehen. Auf diese Weise können sowohl der Mundstücksbereich als auch der Bodenbereich des Behälters mehrfach angeschwemmt werden, während ein Bereich dazwischen weniger häufig angeschwemmt werden kann. Dabei kann es sich auch um eine unabhängige Erfindung handeln.

Das Pressen der Pulpe in der Form zum Ausformen des Fasern umfassenden Behälters kann mit unterschiedlichen Pressdrücken, beispielsweise auch für unterschiedliche Zeitdauern, erfolgen. Mittels einem höheren Pressdruck kann die Pulpe durch das Zusammenpressen mehr komprimiert werden als bei einem kleineren Pressdruck. So können kleinere Wanddicken erzielt werden, die eine höhere Stabilität aufweisen können als weniger stark zusammengedrückte Pulpe. Durch einen höheren Pressdruck kann zudem mehr von dem in der Pulpe enthaltenem Wasser ausgepresst werden, sodass der hergestellte, Fasern umfassende Behälter trockener sein kann.

Das Regeln von zumindest einem der mehreren Herstellungsschritte kann eine Presskraftregelung umfassen. Mittels der Presskraftregelung kann ein in oder an der Form ausgeübter Pressdruck zum Ausformen des Fasern umfassenden Behälters gesteuert werden. Der Pressdruck kann mit einem oder mehreren Pressstempelwerkzeugen, mit einem Ballon (siehe unten) oder mit Luftdruck aufgebracht werden.

Die Presskraftregelung kann eine Kraftregelung eines elektrischen Motors zur Erzeugung einer Presskraft umfassen. Der elektrische Motor kann mit einem Hebel verbunden sein, der die Presskraft übertragen kann.

Die Presskraft kann auf mindestens einen Teil des Behälters einwirken. Beispielsweise kann die Presskraft auf eine Wand der Form einwirken, in die die faserhaltige Pulpe zum Ausformen des Fasern umfassenden Behälters eingebracht werden kann.

Die Kraftregelung kann eine Stromregelung umfassen. Durch die Stromregelung kann eine Stromaufnahme durch den elektrischen Motor und somit die Presskraft geregelt werden

Die Presskraftregelung kann eine Regelung eines hydraulischen Drucks eines elastischen Innenschlauchs umfassen. Der hydraulische Druck kann durch eine eingebrachte Menge von Druckluft geregelt werden. Um die Druckluft für einen gegebene Zeitdauer in dem elastischen Innenschlauch belassen zu können, kann ein Ventil vorgesehen sein.

Neben der Presskraft kann auch eine Pressposition geregelt werden, indem z.B. die Ausdehnung eines Ballons in der Form bei einer bestimmten Ausdehnungsweite gestoppt werden kann.

Das Regeln von zumindest einem der mehreren Herstellungsschritte kann ein Regeln einer Anschwemm- und/oder Anspritzverteilung der Pulpe umfassen. Beim Einbringen der Pulpe mittels einer Anschwemm- und/oder Anspritzverteilung können auch ein oder mehrere Bereiche vorgesehen sein, wo eine Mehrfachanschwemmung bzw. Mehrfachspritzung von Pulpe erfolgen kann. Jene Bereiche, die keine Mehrfachanschwemmung bzw. Mehrfachspritzung von Pulpe erfahren sollen, können während der Anschwemm- und/oder Anspritzverteilung verdeckt werden.

Die Anschwemm- und/oder Anspritzverteilung kann entlang einer Höhe und/oder eines Umfangs des Behälters regelbar sein. Beispielsweise kann die Anschwemm- und/oder Anspritzverteilung derart entlang einer Höhe und/oder eines Umfangs des herzustellenden Behälters variieren, dass auch bei Behältern mit einem nicht-runden Querschnitt eine gleichmäßige Verteilung der Pulpe erreichbar sein kann. In verschiedenen Bereichen der Form können gleichmäßige Verteilungen der Pulpe mit einer gleichen oder mit unterschiedlichen Dicken vorliegen. Ein nicht-runder Querschnitt kann ein ovaler oder ellipsenförmiger oder dreieckiger oder rechteckiger oder allgemein mehreckiger Querschnitt sein. Beispielsweise kann die Größe des Querschnitts entlang der Höhe des Behälters variieren; dies kann auch für einen runden Querschnitt gelten.

Das Regeln von zumindest einem der mehreren Herstellungsschritte kann ein Regeln einer Ausbildung eines hohlen Tragrings umfassen. Nach einem Pressen der in die Form eingebrachten faserhaltigen Pulpe kann ein Werkzeug mit einer hervorstehenden Struktur in eine Mündungsöffnung des ausgeformten Behälters eingebracht, in einer Lage gegenüber des Tragrings positioniert und derart geregelt werden, dass die hervorstehende Struktur vom Behälterinneren her Hohlräume in den Tragring presst.

Das Regeln von zumindest einem der mehreren Herstellungsschritte kann ein Regeln eines Wassergehalts der Pulpe und/oder einer Temperatur der Pulpe umfassen. Der Wassergehalt und/oder die Temperatur können das Verhalten der Pulpe bei der Anschwemm- und/oder Anspritzverteilung und/oder beim Pressen mitbestimmen.

Das Regeln von zumindest einem der mehreren Herstellungsschritte kann ein Regeln einer Bewegung von Formteilen der Form nach einem Einbringen der faserhaltigen Pulpe für das Herstellen eines Fasern umfassenden Behälters umfassen. Durch das Bewegen der Formteile können Bereiche des herzustellenden Behälters vor dem Ausformen gestaucht oder gedehnt werden.

Das Regeln von zumindest einem der mehreren Herstellungsschritte kann ein Regeln einer Bewegung eines Sprühkopfs zum Ausbringen der faserhaltigen Pulpe umfassen. Durch die Bewegung des Sprühkopfs können Abstandsunterschiede zwischen Sprühkopf und Innenfläche der Form beim Aussprühen der faserhaltigen Pulpe ausgeglichen werden.

Das Regeln von zumindest einem der mehreren Herstellungsschritte kann ein Regeln einer Sprühzeit und/oder eines Sprühdrucks und/oder eines Sprühdurchflusses (beispielsweise durch Querschnittsvergrößerung des Sprühkopfes oder der Pulpeleitung zum Sprühkopf) eines Sprühkopfes auf eine bestimmte Position der Form umfassen.

Neben einer Wanddicke kann zusätzlich auch eine Wanddichte bestimmt werden.

Das Regeln von zumindest einem der mehreren Herstellungsschritte kann ein Regeln einer geneigten Anordnung einer Form während eines Anschwemmprozesses der faserhaltigen Pulpe umfassen. Eine Anlagerung der faserhaltigen Pulpe kann so durch die Einwirkung der Schwerkraft beeinflusst werden.

Wird der Behälter nach dem Messen der Wanddicke in eine weitere Form zum Auspressen transportiert, kann eine Regelung der Presskraft in der weiteren Form auf Basis der Wanddickenmessung erfolgen.

Zusätzlich oder alternativ kann die Wanddickenmessung für eine Regelung der Trocknung verwendet werden. Werden die Behälter über einstellbare Trocknungsdüsen mit Luft getrocknet, können diese in der Behandlungszeit, -temperatur oder -position entsprechend eingestellt werden.

Zusätzlich kann das Regeln von zumindest einem der mehreren Herstellungsschritte ein Regeln einer Zusammensetzung der faserhaltigen Pulpe umfassen. Beispielswesie kann sich die Pulpe aus mehreren unterschiedlichen Fasern zusammensetzen.

Ein Fasern umfassender Behälter ist vorgesehen, der mittels des Verfahrens zum Überwachen und Regeln einer Wanddickenverteilung bei einem Herstellungsprozess von Fasern umfassenden Behältern, wie oben oder weiter unten beschrieben, hergestellt wurde.

Eine Vorrichtung zum Überwachen und Regeln einer Wanddickenverteilung bei einem Herstellungsprozess von Fasern umfassenden Behältern mittels des Verfahrens, wie oben oder weiter unten beschrieben, ist vorgesehen.

Eine Vorrichtung zum Überwachen und Regeln einer Wanddickenverteilung bei einem Herstellungsprozess von Fasern umfassenden Behältern kann umfassen:
- ein Faserbehältnis zur Bereitstellung von Fasern umfassenden Herstellungsmaterial für die Fasern umfassenden Behälter,
- mindestens eine Form zur Herstellung des Behälters,
- mindestens ein Messwerkzeug zur Wanddickenmessung des Behälters,
- eine Steuerung zur Regelung von Stellgrößen auf Basis der Wanddickendickenmessung.

Die Vorrichtung kann beispielsweise ein computerlesbares Speichermedium umfassen, auf dem Instruktionen zum Durchführen des Verfahrens gespeichert sind und wobei die Instruktionen beispielsweise durch einen Prozessor der Vorrichtung ausführbar sind, um das Überwachen und Regeln einer Wanddickenverteilung bei einem Herstellungsprozess von Fasern umfassenden Behältern gewährleisten zu können.

Eine Vorrichtung zum Herstellen eines Fasern umfassenden Behälters ist vorgesehen, wobei diese Vorrichtung die Vorrichtung zum Überwachen und Regeln einer Wanddickenverteilung bei einem Herstellungsprozess von Fasern umfassenden Behältern, wie oben oder weiter unten beschrieben, umfasst.

### Kurze Figurenbeschreibung

Die beigefügte Figur stellt beispielhaft zum besseren Verständnis und zur Veranschaulichung Aspekte und/oder Ausführungsbeispiele der Erfindung dar. Es zeigt:
Figur 1 ein Blockdiagramm zum Veranschaulichen des Überwachens und Regelns einer Wanddickenverteilung bei einem Herstellungsprozess von Fasern umfassenden Behältern,
Figur 2 Einfluss eines Regelns eines hydraulischen Drucks eines elastischen Innenschlauchs umfassen auf die Wanddickenverteilung,
Figur 3 Einfluss einer Regelns einer Anschwemm- und/oder Anspritzverteilung von Pulpe auf die Wanddickenverteilung und
Figur 4 Einfluss eines Regelns einer Ausbildung eines hohlen Tragrings auf die Wanddickenverteilung.

### Ausführliche Figurenbeschreibung

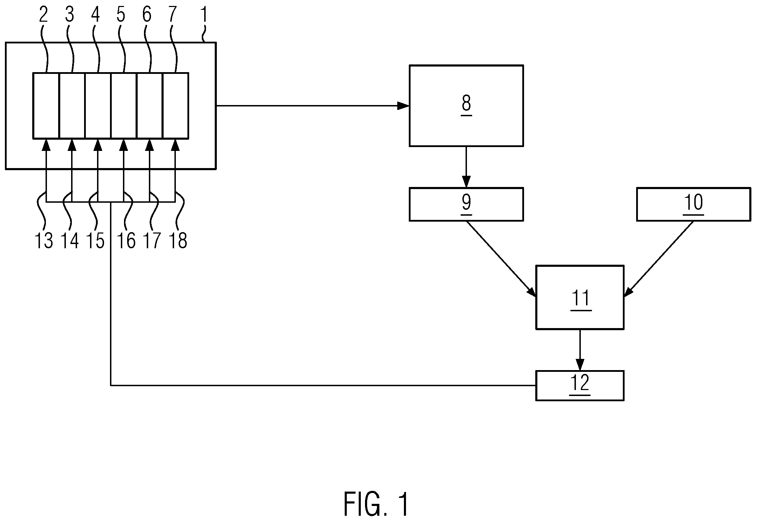

Die Figur 1 zeigt ein Blockdiagramm zum Veranschaulichen des Überwachens und Regelns einer Wanddickenverteilung bei einem Herstellungsprozess von Fasern umfassenden Behältern 8. Mittels einer Vorrichtung 1 können durch durchlaufen mehrerer Herstellungsschritte, hier sechs Herstellungsschritte 2, 3, 4, 5, 6, in einem Herstellungsprozess Fasern umfassende Behälter 8 hergestellt werden. Zum Herstellen des Behälters wird eine faserhaltige Pulpe verwendet.

Eine Wanddickenverteilung des hergestellten Behälters 8 wird gemessen, um eine gemessene Wanddickenverteilung 9 des Behälters zu erhalten. Ein Vergleich 11 der gemessenen Wanddickenverteilung 9 mit einer Soll-Wanddickenverteilung 10 wird durchgeführt. Bei einer Abweichung 12 der gemessenen Wanddickenverteilung 9 von der Soll-Wanddickenverteilung 10, erfolgt ein Regeln 13, 14, 15, 16, 17, 18 von zumindest einem der mehreren Herstellungsschritte 2 - 6.

Ein Herstellungsschritt 2 kann ein Bereitstellen von faserhaltiger Pulpe umfassen. Ein Wassergehalt der Pulpe und/oder eine Temperatur der Pulpe können Einfluss auf die Herstellung des Fasern umfassenden Behälters und seiner Wanddickenverteilung haben. Dementsprechend können bei einem Regeln 13 der Wanddickenverteilung, wenn bei der Überwachung der Wanddickenverteilung eine Abweichung 12 festgestellt wurde, der Wassergehalt und/oder die Temperatur geregelt werden, um die gemessene Wanddickenverteilung 9 bei den nachfolgend hergestellten Fasern umfassenden Behältern der Soll-Wanddickenverteilung 10 anzunähern.

Ein anderer Herstellungsschritt 3 kann ein Einbringen der faserhaltigen Pulpe in eine Form umfassen. Das Einbringen kann eine Anschwemm- und/oder Anspritzverteilung der Pulpe umfassen. Beispielsweise kann die Anschwemm- und/oder Anspritzverteilung derart entlang einer Höhe und/oder eines Umfangs des herzustellenden Behälters variieren, dass auch bei Behältern mit einem nicht-runden Querschnitt eine gleichmäßige Verteilung der Pulpe erreichbar sein kann. Entsprechend kann ein Regeln 14 der Anschwemm- und/oder Anspritzverteilung entlang einer Höhe und/oder eines Umfangs des herzustellenden Behälters erfolgen, wenn bei der Überwachung der Wanddickenverteilung eine Abweichung 12 festgestellt wurde, um die gemessene Wanddickenverteilung 9 bei den nachfolgend hergestellten Fasern umfassenden Behältern der Soll-Wanddickenverteilung 10 anzunähern. Beim Einbringen der Pulpe mittels einer Anschwemm- und/oder Anspritzverteilung können auch ein oder mehrere Bereiche vorgesehen sein, wo eine Mehrfachanschwemmung bzw. Mehrfachspritzung von Pulpe erfolgen kann. Jene Bereiche, die keine Mehrfachanschwemmung bzw. Mehrfachspritzung von Pulpe erfahren sollen, können während der Anschwemm- und/oder Anspritzverteilung verdeckt werden. Wenn bei der Überwachung der Wanddickenverteilung eine Abweichung 12 festgestellt wurde, kann ein Regeln 14 einer Anzahl der Anschwemm- und/oder Anspritzdurchläufe erfolgen und/oder einer Verdeckung der Bereiche, die keine Mehrfachanschwemmung bzw. Mehrfachspritzung von Pulpe erfahren sollen, um die gemessene Wanddickenverteilung 9 bei den nachfolgend hergestellten Fasern umfassenden Behältern der Soll-Wanddickenverteilung 10 anzunähern.

Ein weiterer Herstellungsschritt 15 kann ein Pressen der faserhaltigen Pulpe in der Form zum Ausformen des Fasern umfassenden Behälters umfassen. Hierbei kann ein Regeln 15 der Presskraft erfolgen, um einen hydraulischen Druck eines elastischen Innenschlauchs einzustellen, wenn bei der Überwachung der Wanddickenverteilung eine Abweichung 12 festgestellt wurde, um die gemessene Wanddickenverteilung 9 bei den nachfolgend hergestellten Fasern umfassenden Behältern der Soll-Wanddickenverteilung 10 anzunähern.

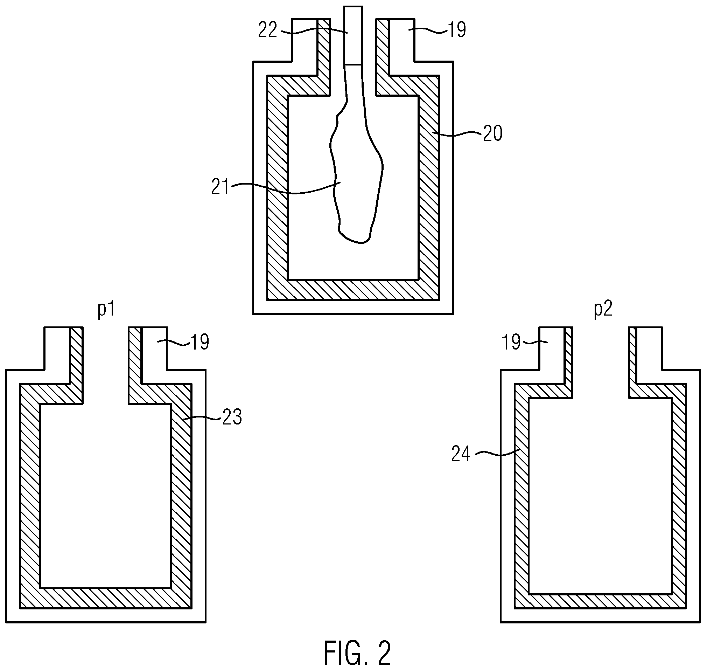

Die Abbildungen der Figur 2 zeigen den Einfluss eines Regelns eines hydraulischen Drucks eines elastischen Innenschlauchs 21 auf die Wanddickenverteilung. In der Figur 2 oben ist eine Form 19 mit eingebrachter Pulpe 20, die sich an der Innenfläche der Form 19 angelagert hat, dargestellt. Die Innenfläche der Form 19 entspricht, zumindest im Wesentlichen, der Außenkontur des herzustellenden, Fasern umfassenden Behälters. In die Form 19 ist ein elastischer Innenschlauch 21 eingebracht, der mittels einer Druckluftversorgung 22 aufblasbar ist, dadurch einen Druck auf die Pulpe ausüben kann und so den Fasern umfassenden Behälter ausformen kann. Je größer der hydraulische Druck gewählt wird, umso mehr kann die Pulpe durch den auf sie einwirkenden Druck zusammengepresst werden. Obergrenzen des hydraulischen Drucks können durch den elastischen Innenschlauch, die Form (z.B. Stabilität) und/oder die zu erreichende Wanddickenverteilung sein, die beispielsweise möglichst einer Soll-Wanddickenverteilung entsprechen soll, gegeben sein.

Beispielhaft sind in der Figur 2 unten links und unten links zwei Darstellungen nach dem Ausüben des hydraulischen Drucks auf die Pulpe zu sehen. Dabei wurde links ein Druck p1 ausgeübt, der kleiner als der rechts ausgeübte Druck p2 war. Entsprechend ist die Pulpe 23 in der linken Form weniger stark zusammengedrückt als die Pulpe 24 in der rechten Form. Die Wanddickenverteilung eines Fasern umfassenden Behälters, der in der linken Form ausgeformt wird, kann somit eine Wanddickenverteilung aufweisen, deren Werte der Dicke in den entsprechenden Bereichen größer sind als bei der Wanddickenverteilung eines Fasern umfassenden Behälters, der in der rechten Form ausgeformt wird.

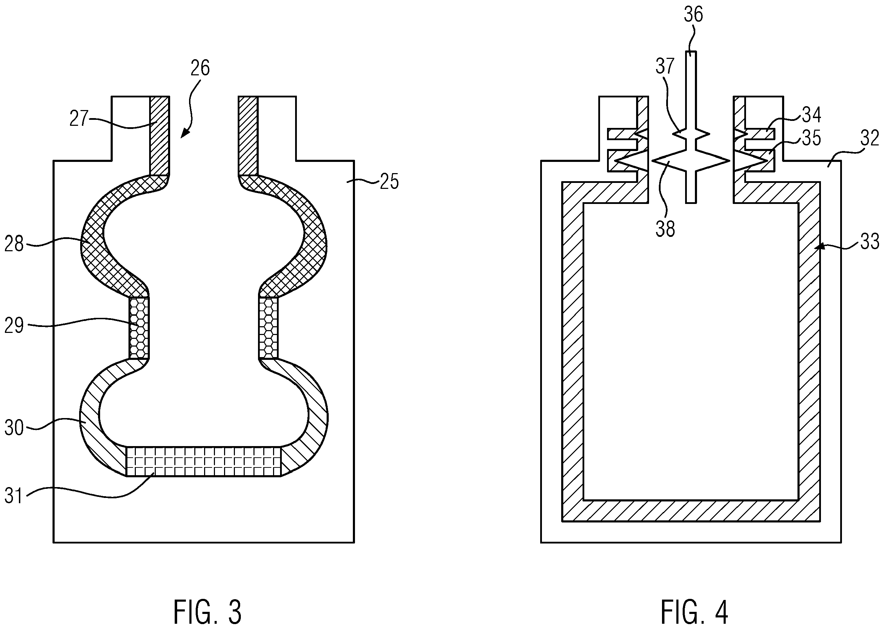

Die Figur 3 zeigt den Einfluss eines Regelns einer Anschwemm- und/oder Anspritzverteilung von Pulpe 26. Die in eine Form 25 mittels einer Anschwemm- und/oder Anspritzverteilung eingebrachte Pulpe 26 weist eine Wanddickenverteilung auf, die in verschiedenen Bereichen 27, 28, 29, 30, 31 unterschiedliche Werte der Dicke aufweist. Die Pulpe 26 hat sich an der Innenfläche der Form 25 angelagert, wobei die Innenfläche der Form 25, zumindest im Wesentlichen, der Außenkontur des herzustellenden, Fasern umfassenden Behälters entspricht. Beispielsweise kann der Bodenbereich 31 eine erste Wanddickenverteilung mit einem ersten Wert der Dicke aufweisen, der am größten ist. Der Halsbereich 27 und ein im Wesentlichen vertikal verlaufender erster Körperbereich 29 können eine zweite Wanddickenverteilung mit einem zweiten Wert der Dicke aufweisen, der kleiner als der erste Wert ist. Der gebogen verlaufende zweite Körperbereich 28 und dritte Körperbereich 30 können jeweils eine Wanddickenverteilung mit einem von oben nach unten zunehmenden Wert der Dicke aufweisen, der zwischen dem ersten Wert und dem zweiten Wert liegen kann.

Die Figur 4 zeigt den Einfluss eines Regelns einer Ausbildung eines hohlen Tragrings 34, 35. Es ist eine Form 32 mit eingebrachter Pulpe 33 dargestellt, die an der Innenfläche der Form 32 angelagert ist. Die Innenfläche der Form 32 entspricht, zumindest im Wesentlichen, der Außenkontur des herzustellenden, Fasern umfassenden Behälters. Die Pulpe 33 kann bereits beispielsweise mit einem in die Form 32 eingebrachten elastischen Innenschlauch gepresst worden sein, indem beispielsweise Druckluft in den elastischen Innenschlauch eingebracht wurde, um ihn aufzublasen. Derart können bereits zwei Tragringe im Halsbereich ausgebildet worden sein. Um daraus nun hohle Trageringe 34, 35 zu machen kann eine Vorrichtung 36 in den Mündungsbereich eingebracht werden. Die Vorrichtung 36 kann zwei den zu erzeugenden Hohlbereichen entsprechend gegenteilig ausgebildete Vorsprünge 37, 38 umfassen. Für eine Einwirkung auf die Pulpe der Tragringe kann die Vorrichtung 36 beispielsweise radial ausfahrbar gestaltet sein, sodass die Vorsprünge 37, 38 in die Pulpe der Tragringe drücken und so die hohlen Tragringe 34, 35 ausformen können.

## Patentansprüche

1. Verfahren zum Überwachen und Regeln einer Wanddickenverteilung bei einem Herstellungsprozess von Fasern umfassenden Behältern (8), wobei das Verfahren umfasst:
- Herstellen eines Fasern umfassenden Behälters (8) mittels eines mehrere Herstellungsschritte (2, 3, 4, 5, 6, 7) umfassenden Herstellungsprozesses, der eine faserhaltige Pulpe oder trockene Fasern verwendet,
- Messen einer Wanddickenverteilung (9) des hergestellten Behälters (8),
- Vergleichen (11) der gemessenen Wanddickenverteilung (9) mit einer Soll-Wanddickenverteilung (10),
- bei einer Abweichung (12) der gemessenen Wanddickenverteilung (9) von der Soll-Wanddickenverteilung (10), Regeln (14, 15, 16, 17, 18 ,19) von zumindest einem der mehreren Herstellungsschritte (2, 3, 4, 5, 6, 7).

2. Das Verfahren nach Anspruch 1, wobei das Regeln (14, 15, 16, 17, 18 ,19) von zumindest einem der mehreren Herstellungsschritte (2, 3, 4, 5, 6, 7) eine Presskraftregelung umfasst.

3. Das Verfahren nach Anspruch 2, wobei die Presskraftregelung eine Kraftregelung eines elektrischen Motors zur Erzeugung einer Presskraft umfasst.

4. Das Verfahren nach Anspruch 3, wobei die Presskraft auf mindestens einen Teil des Behälters einwirkt.

5. Das Verfahren nach Anspruch 3 oder 4, wobei die Kraftregelung eine Stromregelung umfasst.

6. Das Verfahren nach Anspruch 2, wobei die Presskraftregelung eine Regelung eines hydraulischen Drucks eines elastischen Innenschlauchs (21) umfasst.

7. Das Verfahren nach einem der Ansprüche 1 bis 6, wobei das Regeln (14, 15, 16, 17, 18 ,19) von zumindest einem der mehreren Herstellungsschritte (2, 3, 4, 5, 6, 7) ein Regeln einer Anschwemm- und/oder Anspritzverteilung der Pulpe umfasst.

8. Das Verfahren nach Anspruch 7, wobei die Anschwemm- und/oder Anspritzverteilung entlang einer Höhe und/oder eines Umfangs des Behälters regelbar ist.

9. Das Verfahren nach einem der Ansprüche 1 bis 8, wobei das Regeln (14, 15, 16, 17, 18 ,19) von zumindest einem der mehreren Herstellungsschritte (2, 3, 4, 5, 6, 7) ein Regeln einer Ausbildung eines hohlen Tragrings (34, 35) umfasst.

10. Das Verfahren nach einem der Ansprüche 1 bis 9, wobei das Regeln (14, 15, 16, 17, 18 ,19) von zumindest einem der mehreren Herstellungsschritte (2, 3, 4, 5, 6, 7) ein Regeln eines Wassergehalts der Pulpe und/oder einer Temperatur der Pulpe umfasst.

11. Das Verfahren nach einem der Ansprüche 1 bis 10, wobei das Regeln (14, 15, 16, 17, 18 ,19) von zumindest einem der mehreren Herstellungsschritte (2, 3, 4, 5, 6, 7) ein Regeln einer Bewegung von Formteilen nach einem Einbringen der faserhaltigen Pulpe für das Herstellen eines Fasern umfassenden Behälters umfasst.

12. Das Verfahren nach einem der Ansprüche 1 bis 11, wobei das Regeln (14, 15, 16, 17, 18 ,19) von zumindest einem der mehreren Herstellungsschritte (2, 3, 4, 5, 6, 7) ein Regeln einer Bewegung eines Sprühkopfs zum Ausbringen der faserhaltigen Pulpe umfasst.

13. Das Verfahren nach einem der Ansprüche 1 bis 12, wobei das Regeln (14, 15, 16, 17, 18 ,19) von zumindest einem der mehreren Herstellungsschritte (2, 3, 4, 5, 6, 7) ein Regeln einer geneigten Anordnung einer Form während eines Anschwemmprozesses der faserhaltigen Pulpe umfasst.

14. Fasern umfassender Behälter, der mittels des Verfahrens zum Überwachen und Regeln einer Wanddickenverteilung bei einem Herstellungsprozess von Fasern umfassenden Behältern (8) nach einem der Ansprüche 1 bis 13 hergestellt wurde.

15. Vorrichtung zum Überwachen und Regeln einer Wanddickenverteilung bei einem Herstellungsprozess von Fasern umfassenden Behältern, wobei die Vorrichtung umfasst:
- ein Faserbehältnis zur Bereitstellung von Fasern umfassenden Herstellungsmaterial für die Fasern umfassenden Behälter
- mindestens eine Form zur Herstellung des Behälters
- mindestens ein Messwerkzeug zur Wanddickenmessung des Behälters
- eine Steuerung zur Regelung von Stellgrößen auf Basis der Wanddickendickenmessung.

16. Vorrichtung zum Überwachen und Regeln einer Wanddickenverteilung bei einem Herstellungsprozess von Fasern umfassenden Behältern (8) mittels des Verfahrens nach einem der Ansprüche 1 bis 13.

17. Vorrichtung zum Herstellen eines Fasern umfassenden Behälters (8), wobei diese Vorrichtung die Vorrichtung nach Anspruch 15 oder 16 umfasst.
